# EUROPEAN PATENT APPLICATION

(11) **EP 4 589 071 A1**
(43) Date of publication of application: **23.07.2025**
(21) Application number: 25150933.7
(22) Date of filing: 09.01.2025
(51) Int. Cl.: E02B 3/06, B63B 77/10, F24S 20/70, H02S 20/00, B63B 35/44

(54) **WIND AND WAVE REDUCTION DEVICE FOR AN OFFSHORE SOLAR PHOTOVOLTAIC MODULE AND WIND AND WAVE REDUCTION SYSTEM INCLUDING THE SAME**

(30) Priority: 17.01.2024 TW 113101900
(71) Applicant: Sun Rise E & T Corporation, Pingtung City, Pingtung County 90093 (TW)
(72) Inventor: TUNG, Chi-Hsu, 90093 Pingtung City (TW)
(74) Representative: V.O.

(57) **Abstract**

A wind and wave reduction device includes base seats (11) and base pipes (12). Each base seat (11) has two lateral ends and through holes (110) disposed between the lateral ends. Each base pipe (12) extends through a respective one of the through holes (110) of each of the base seats (11). Step plates (16) are disposed on support frames (15), and each of the support frames (15) is positioned between two adjacent ones of the base pipes (12). A lateral frame (21) is connected transversely to one of the lateral ends of each of the base seats (11). A blocking plate (22) is fixed to the lateral frame (21) and has air disturbing holes (220).

## Description

The disclosure relates to an offshore solar photovoltaic auxiliary device, and more particularly to a wind and wave reduction device for offshore solar photovoltaic module and a wind and wave reduction system including the same.

In comparison with a solar power generation device disposed on land, an offshore solar photovoltaic device is disposed on a sea surface distant from the land. As a result, the offshore solar photovoltaic device may avoid exploiting the land, and may also receive sufficient sunlight to effectively generate electricity.

The offshore solar photovoltaic device is positioned away from the land to prevent offshore activities near the land from being adversely affected and to benefit from maximum sunlight. In open sea, waves and winds may be relatively strong. Although the offshore solar photovoltaic device is relatively large in size and may generate greater power, the strong winds and waves may damage the offshore solar photovoltaic device. When the offshore solar photovoltaic device is damaged, maintenance cost of the offshore solar photovoltaic device is high, and the offshore solar photovoltaic device may not be able to generate an expected amount of power.

Therefore, one object of the disclosure is to provide a wind and wave reduction device for an offshore solar photovoltaic module that can alleviate at least one of the drawbacks of the prior art.

According to an aspect of the disclosure, there is provided a wind and wave reduction device according to claim 1.

According to an aspect of the disclosure, there is provide a wind and wave reduction system according to claim 3.

Other features and advantages of the disclosure will become apparent in the following detailed description of the embodiment(s) with reference to the accompanying drawings. It is noted that various features may not be drawn to scale.
Figure 1 is a perspective view illustrating a wind and wave reduction device according to an embodiment of the disclosure.
Figure 2 is a top view illustrating a wind and wave reduction system including wind and wave reduction devices of the embodiment for placement of offshore solar photovoltaic modules.
Figure 3 is a schematic side view of the embodiment illustrating a base unit and a protective unit of the wind and wave reduction device.
Figure 4 is a perspective view of the embodiment illustrating base seats and base pipes to reduce waves.
Figure 5 is a perspective view of the embodiment illustrating the wind and wave reduction system.
Figure 6 is a top view of the embodiment illustrating a bent pipe of the wind and wave reduction system.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

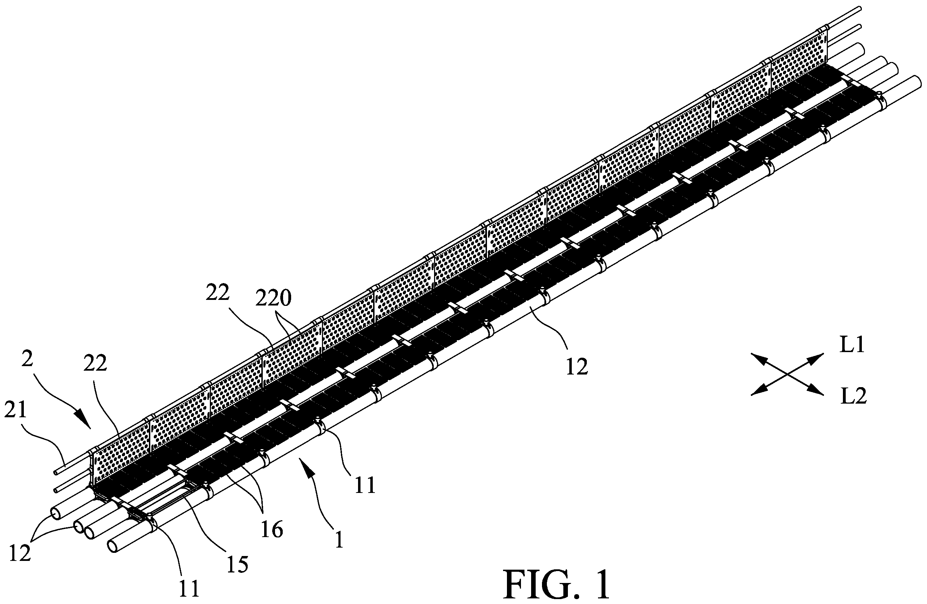

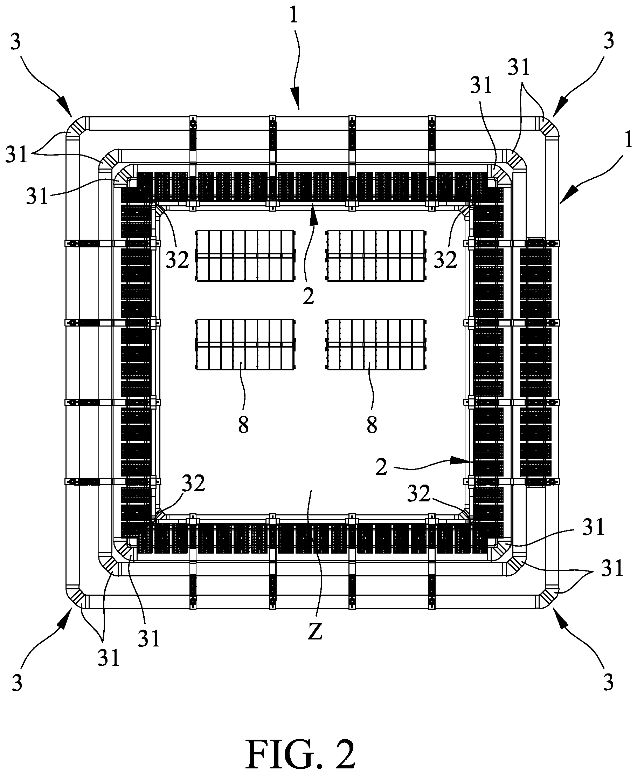

Referring to Figure 1, a wind and wave reduction device according to an embodiment of the disclosure includes a base unit 1 and a protective unit 2 connected to the base unit 1. As shown in Figure 2, a wind and wave reduction system of the disclosure includes a plurality of the wind and wave reduction devices disposed on a sea surface for placement of a plurality of offshore solar photovoltaic modules 8 that are arranged in a spaced-apart manner on the sea surface. As shown in Figure 2, the number of the wind and wave reduction devices is four. Accordingly, an inner filed (Z) is established by the wind and wave reduction devices for the placement of the offshore solar photovoltaic modules 8 so that the offshore solar photovoltaic modules 8 are likely to be protected in all directions by the wind and wave reduction devices. Furthermore, based on actual requirements, the wind and wave reduction system of the disclosure is adjustable in dimension.

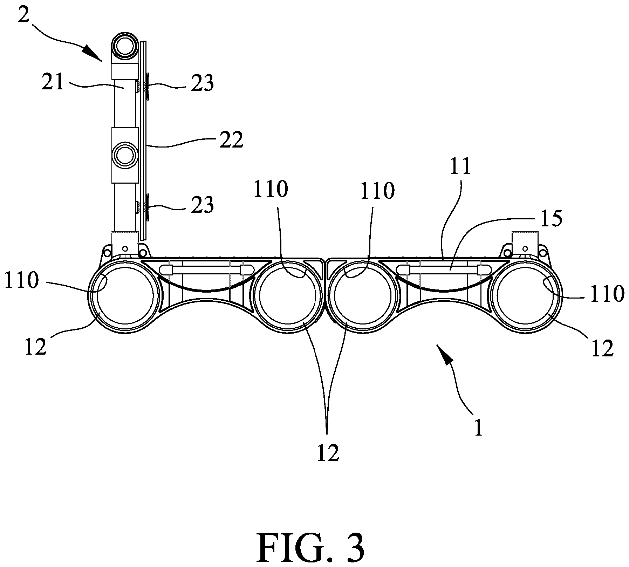

Referring to Figures 1 and 3, the base unit 1 includes a plurality of base seats 11, a plurality of base pipes 12, a plurality of support frames 15, and a plurality of step plates 16. The base seats 11 are spaced apart from each other in a first direction (L1). Each of the base seats 11 has two lateral ends that are opposite to each other in a second direction (L2) perpendicular to the first direction (L1), and a plurality of through holes 110 that are disposed between the lateral ends, that extend through the base seat 11 in the first direction (L1), and that are spaced apart from each other in the second direction (L2). Each of the base pipes 12 extends through a respective one of the through holes 110 of each of the base seats 11. Each of the support frames 15 is positioned between two adjacent ones of the base pipes 12. The step plates 16 are disposed on the support frames 15 so that an operator may walk on the step plates 16 for maintenance. Specifically, the base seat 11 is made from a rigid material. Based on a dimensional requirement of the wind and wave reduction system of the disclosure, each of the base pipes 12 may vary in length based on selection. The base seats 11 and the base pipes 12 cooperatively form a main structure.

As shown in Figure 1 and 3, the protective unit 2 includes a lateral frame 21, a plurality of blocking plates 22, and a plurality of hanging members 23. The lateral frame 21 is connected transversely to one of the lateral ends of each of the base seats 11. The blocking plates 22 are fixed to the lateral frame 21. The hanging members 23 fix the blocking plates 22 onto the lateral frame 21. Each of the blocking plates 22 is a hardness plate, and has a plurality of air disturbing holes 220 penetrating therethrough in the second direction (L2).

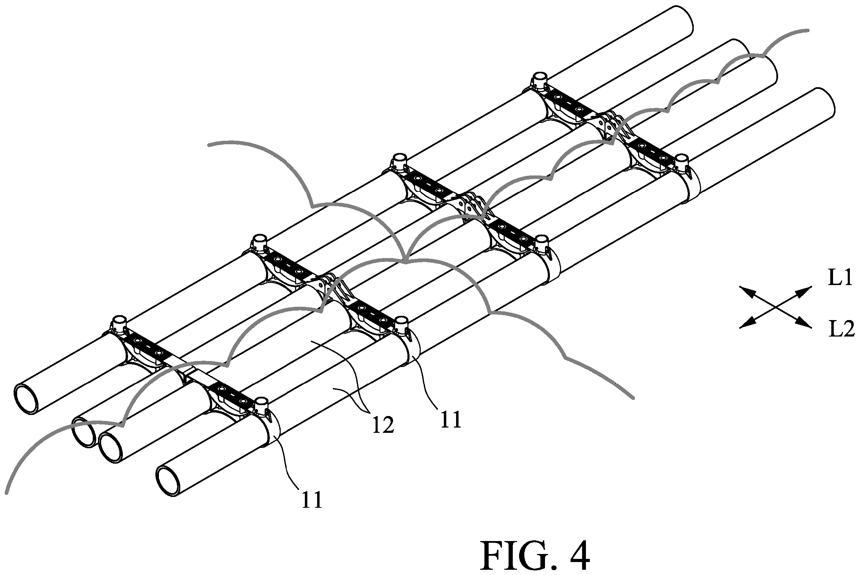

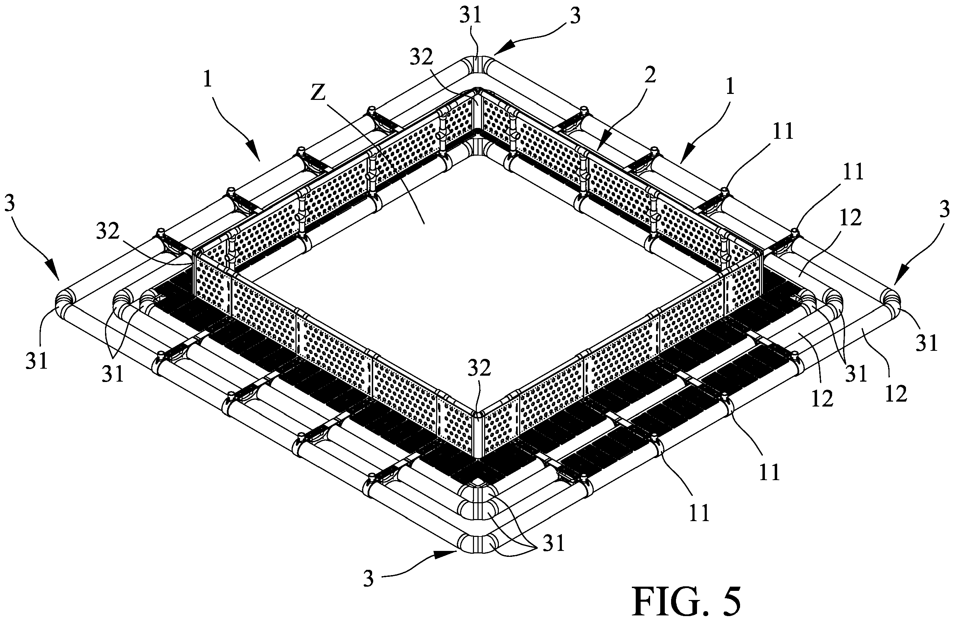

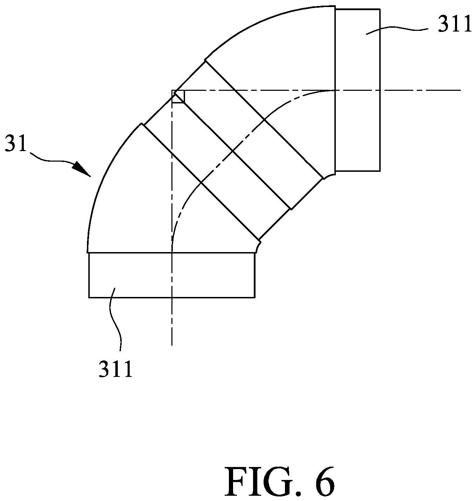

Referring to Figures 4 and 5 in combination with Figure 1, to place the wind and wave reduction system of the disclosure on the sea surface at a distance away from a shore, the wind and wave reduction devices are first assembled to each other on the shore. As shown in Figure 5, the wind and wave reduction system of the disclosure includes the four wind and wave reduction devices, and four connecting modules 3. Each of the connecting modules 3 includes four bent pipes 31 and a connecting member 32. For each of the connecting modules 3, each of the bent pipes 31 interconnects a respective one of the base pipes 12 of one of two respective adjacent ones of the wind and wave reduction devices and a respective one of the base pipes 12 of the other one of the respective adjacent ones of the wind and wave reduction devices. For each of the connecting modules 3, the connecting member 32 interconnects the lateral frames 21 of two respective adjacent ones of the wind and wave reduction devices such that the wind and wave reduction devices are connected to each other and cooperatively define the inner field (Z). In this embodiment, as shown in Figure 6, each of the bent pipes 31 has two extension portions 311 that are integrally connected to each other. For each of the bent pipes 31, each of the extension portions 311 extends along an extension line, and the extension lines of the extension portions 311 are perpendicular to each other. Furthermore, the blocking plates 22 of each of the wind and wave reduction devices is adjacent to the inner filed (Z). The base pipes 12 of each of the wind and wave reduction devices are spaced apart from each other in a direction away from the inner field (Z).

After assembly of the wind and wave reduction system is completed, the wind and wave reduction system is moved to a predetermined offshore location, and is anchored and positioned at the predetermined offshore location while the offshore solar photovoltaic modules 8 are placed in the inner field (Z). Because the connecting member 32 of each of the connecting modules 3 interconnects the lateral frames 21 of two respective adjacent ones of the wind and wave reduction devices, the blocking plates 22 stably enclose the inner field (Z). As a result, the blocking plates 22 may shield the inner field (Z) from strong offshore winds in all directions so as to protect the offshore solar photovoltaic modules 8 in the inner filed (Z). Furthermore, the air disturbing holes 220 of the blocking plates 22 are likely to disturb airflow, thereby reducing the winds. As shown in Figures 3 and 4, because the base seats 11 are spaced apart from each other in the first direction (L1), because the through holes 110 of each of the base seats 11 are spaced apart from each other in the second direction (L2) , and because each of the base pipes 12 extends through the respective one of the through holes 110 of each of the base seats 11, the base seats 11 are likely to impede waves in the first direction (L1) so as to diminish strengths of the waves sequentially passing the base seats 11 in the first direction (L1), and the base pipes 12 are likely to impede waves in the second direction (L2) so as to diminish strengths of the waves sequentially passing the base pipes 12 in the second direction (L2). Accordingly, when waves in all directions move toward the wind and wave reduction system of the disclosure, the waves in all directions are likely to be effectively reduced by the base units 1 of the wind and wave reduction devices, thereby reducing adverse effects on the stability of the wind and wave reduction system.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A wind and wave reduction device for an offshore solar photovoltaic module (8), said wind and wave reduction device **characterized by**:
a base unit (1) including
a plurality of base seats (11) that are spaced apart from each other in a first direction (L1), each of said plurality of base seats (11) having two lateral ends that are opposite to each other in a second direction (L2) perpendicular to the first direction (L1), and a plurality of through holes (110) that are disposed between said lateral ends, that extend through said base seat (11) in the first direction (L1), and that are spaced apart from each other in the second direction (L2),
a plurality of base pipes (12), each of said base pipes (12) extending through a respective one of said plurality of through holes (110) of each of said plurality of base seats (11),
a plurality of support frames (15), each of said plurality of support frames (15) being positioned between two adjacent ones of said plurality of base pipes (12), and
a plurality of step plates (16) that are disposed on said plurality of support frames (15); and
a protective unit (2) connected to said base unit (1), and including
a lateral frame (21) that is connected transversely to one of said lateral ends of each of said plurality of base seats (11), and
at least one blocking plate (22) that is fixed to said lateral frame (21) and that has a plurality of air disturbing holes (220) penetrating therethrough in the second direction (L2).

2. The wind and wave reduction device as claimed in claim 1, wherein said protective unit (2) further includes at least one hanging member (23) that fixes said at least one blocking plate (22) onto said lateral frame (21).

3. A wind and wave reduction system **characterized by**:
a plurality of said wind and wave reduction devices as claimed in claim 1; and
a plurality of connecting modules (3), each of said plurality of connecting modules (3) including a connecting member (32) interconnecting said lateral frames (21) of two respective adjacent ones of said plurality of wind and wave reduction devices such that said plurality of wind and wave reduction devices are connected to each other and cooperatively define an inner field (Z); and
wherein said at least one blocking plate (22) of each of said plurality of wind and wave reduction devices is adjacent to said inner filed (Z); and
wherein said plurality of base pipes (12) of each of said plurality of wind and wave reduction devices are spaced apart from each other in a direction away from said inner field (Z).

4. The wind and wave reduction system as claimed in claim 3, wherein each of said plurality of connecting modules (3) further includes a plurality of bent pipes (31), each of said plurality of bent pipes (31) interconnecting a respective one of said plurality of base pipes (12) of one of the respective adjacent ones of said plurality of wind and wave reduction devices and a respective one of said plurality of base pipes (12) of another one of the respective adjacent ones of said plurality of wind and wave reduction devices.

5. The wind and wave reduction system as claimed in claim 4, wherein:
each of said plurality of bent pipes (31) has two extension portions (311) that are integrally connected to each other; and
for each of said plurality of bent pipes (31), each of said extension portions (311) extends along an extension line, and the extension lines of said extension portions (311) are perpendicular to each other.
